(19) Europäisches Patentamt / European Patent Office / Office européen des brevets

(11) **EP 3 782 811 B1**

(12) **EUROPEAN PATENT SPECIFICATION**

(45) Date of publication and mention
of the grant of the patent:
**05.10.2022 Bulletin 2022/40**

(21) Application number: **19382719.3**

(22) Date of filing: **21.08.2019**

(51) International Patent Classification (IPC):
*B32B 5/02* (2006.01)        *B32B 5/08* (2006.01)
*B32B 5/10* (2006.01)        *B32B 5/12* (2006.01)
*B32B 5/26* (2006.01)        *B32B 7/02* (2019.01)
*B32B 17/04* (2006.01)      *B64C 1/40* (2006.01)
*E04B 1/84* (2006.01)       *G10K 11/00* (2006.01)

(52) Cooperative Patent Classification (CPC):
**B32B 5/024; B32B 5/08; B32B 5/10; B32B 5/12;**
**B32B 5/26; B32B 7/02; B64C 1/40; G10K 11/168;**
B32B 2250/03; B32B 2250/05; B32B 2250/20;
B32B 2250/42; B32B 2260/023; B32B 2260/046;
B32B 2262/0207;                           (Cont.)

(54) **SOUND WAVES ABSORBING LAMINATE COMPOSITE MATERIAL STRUCTURE**

SCHALLWELLENABSORBIERENDE LAMINATVERBUNDWERKSTOFFSTRUKTUR

STRUCTURE DE MATÉRIAU COMPOSITE STRATIFIÉ ABSORBANT LES ONDES SONORES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**24.02.2021 Bulletin 2021/08**

(73) Proprietor: **Airbus Operations, S.L.U.**
**28906 Getafe (Madrid) (ES)**

(72) Inventors:
• **OLMO MORA, Raúl**
  **28906 Getafe - Madrid (ES)**
• **BLANCO VARELA, Tamara**
  **28906 Getafe - Madrid (ES)**

(74) Representative: **ABG Intellectual Property Law,**
**S.L.**
**Avenida de Burgos, 16D**
**Edificio Euromor**
**28036 Madrid (ES)**

(56) References cited:
**WO-A1-2008/147754      WO-A1-2018/002229**

(52) Cooperative Patent Classification (CPC): (Cont.)
B32B 2262/101; B32B 2262/106; B32B 2262/14;
B32B 2307/102; B32B 2307/52; B32B 2605/18;
B32B 2607/00; Y02T 50/40

**Description**

## TECHNICAL FIELD OF THE INVENTION

The present invention belongs to the field of aircraft structures and the materials of these aircraft structures, more particularly, to the field of noise absorbing materials for aircraft structures.

## BACKGROUND OF THE INVENTION

In ordinary structural parts of an aircraft, the current carbon fiber reinforcing polymer (CFRP) structures have not the capability to absorb noise coming, for example, from an engine of the aircraft. In most of the cases where the impact of noise of these structures needs to be reduces, additional absorbent material layers are positioned on key points of such CFRP structure for achieving a noise reduction.

Current proposal for integrating the absorbent materials to the CFRP structures are based on a continue ply of elastomeric material bonded to carbon ply by means of adhesive joint. This solution reduces the structural strength of such structures due to the lack of shear load transfer, and also due to strain incompatibility on materials.

For reducing noise impact on particular aircraft structures, i.e. passenger cabin, without an impact on structure efficiency (weight/strength), and for easily integrating materials in particular aircraft structures is needed.

Therefore, the present invention provides a laminate composite material structure for an aircraft structure which absorbs sound waves and solves the drawbacks previously mentioned.

Document WO2018/002229 describes a multilayer hybrid composite comprising high performance polymer fibers and fibers selected from a group consisting of glass fibers and carbon fibers.

## SUMMARY OF THE INVENTION

The present invention provides an alternative solution for the aforementioned problems, by a sound waves absorbing laminate composite material structure according to claim 1, a method for manufacturing a sound waves absorbing laminate composite material structure according to claim 9 and an aircraft according to claim 13. In dependent claims, preferred embodiments of the invention are defined.

In a first inventive aspect, the invention provides a sound waves absorbing laminate composite material structure for an aircraft structure, the laminate composite material structure comprising at least three stacked plies of an hybrid composite material, each hybrid composite material ply comprising a combination of:

- a plurality of first tows arranged parallel to a warp direction, wherein each first tow has a first width $W_1$,
- a plurality of second tows arranged parallel to a weft direction, wherein each second tow has a third width $W_3$, and
- a plurality of sound waves absorbent material tows arranged parallel to the warp direction, wherein each sound waves absorbent material tow has a second width $W_2$,

wherein

the first and second tows are tows of carbon fiber reinforcing polymer (CFRP) or glass fiber reinforcing polymer (GFRP); and
the first and second plurality of tows and the plurality of sound waves absorbent material tows are arranged intertwined between them forming a pattern for each hybrid material ply, making the sound waves absorbing laminate composite material structure achieves an improved absorbing level of sound waves for wavelength $\lambda$ complying with the formula

$$\lambda < (2 \times W_2 + W_1)$$

wherein the sound waves absorbent material is:

a pure insulation material comprising tows of an elastomeric material,
or a reinforced insulation material comprising tows of an elastomeric material and a reinforcement carrier embedded in the elastomeric material.

The hybrid composite material will be understood as the combination of materials of different natures, particularly a combination of plastic material and absorbent materials. The intertwining of first and second tows and sound waves absorbent tows provides a hybrid composite material ply which advantageously increase sound absorption efficiency with low impact on shear load transfer.

The sound waves absorbing laminate composite material structure advantageously transfers efforts to adjacent plies of hybrid composite material and is capable to reduce the noise introduced in aircraft structures i.e. the motor noise and turbulence noise introduces in the aircraft cabin.

The present laminate composite material structure comprises at least three stacked hybrid composite material plies which are the minimum number of plies that the laminate composite material structure needs for absorbing almost entire wave lengths without reduction of mechanical properties of structure.

The polymer materials of the first and second tows are plastic material reinforced by carbon fiber (CF) or glass fiber (GF). These tows of polymeric material provides the mechanical properties to the hybrid composite material, and they serve as the main base of the hybrid material.

The laminate composite material structure of the present invention will absorb the noise and transmit the shear efforts in a common structural behavior thanks to the combination of at least three hybrid composite material plies.

The particular distribution of the first and second tows in both warp and weft direction, as well as the intertwining of the sound waves absorbent material tows in the warp direction with the first and second tows, provides a hybrid composite material ply pattern endowed with high sound absorption efficiency. The warp direction is perpendicular to the weft direction.

Therefore, the present laminate composite material structure advantageously reduces noise impact inside the aircraft without an impact on structure efficiency (weight/strength) and it is an integrated material for manufacturing aircraft structures. Further, manufacturing technologies currently used are maintained and thus the impact on production rates and procedures is very low.

In a particular embodiment, the laminate composite material structure comprises a plurality of composite material plies of carbon fiber reinforcing polymer (CFRP) or glass fiber reinforcing polymer (GFRP), being interspersed a composite material ply between each two consecutive hybrid composite material plies.

The combination of CFRP or GFRP plies with hybrid composite material plies advantageously provides a laminate composite material structure with a high structural requirement regarding stiffness.

In a particular embodiment, the first width $W_1$ is equal to the third width $W_3$.

Advantageously, the equal width for the first tow in the warp direction and the second tow in the weft direction maintains a balance and equilibrium between both fabric axes, as well as to simplify the raw material supply for fabric compound.

In a particular embodiment, the pattern is 2x2 twill weave carbon fiber pattern.

In another particular embodiment, the pattern is a 5 harness carbon fiber pattern.

In a particular embodiment, the at least three stacked hybrid material plies are stacked in stacked planes parallel among them in such a way that

a first hybrid composite material ply is arranged in a first direction,
a second hybrid composite material ply is arranged in a second direction, and
a third hybrid composite material ply is arranged in a third direction respectively,

wherein the second direction forms +45° respect to the first direction and the third direction forms -45° respect to the first direction.

The stacking of hybrid composite material plies with different arrangement for each ply provides a kind of acoustic net for increasing the acoustic material specific surface that advantageously reduces the wave length of transmitted sound waves.

According to the laminate composite material structure, each hybrid composite material ply is comprised in a stacked plane so that the stacked planes of all the hybrid composite material plies are parallel among them. It will be understood in this document that for a first hybrid material ply, the warp direction of the first tows and sound waves absorbent tows is a first direction; for a second hybrid composite material ply, the direction of the first tows and sound waves absorbent material tows is a second direction; and for a third hybrid composite material ply, the direction of the first tows and sound waves absorbent material tows is a third direction; so that in a particular example the second direction forms +45°respect to the first direction, and the third direction forms - 45° respect to the first direction. That is, if the three hybrid composite material plies are laminated all in a same lamination direction, at the time to stack the hybrid composite material plies, each hybrid composite material ply is rotated respect to the others.

In another particular embodiment, the sound waves absorbing laminate composite material structure comprises, in order of stacking, thirty plies of composite material, a first hybrid composite material ply, a ply of composite material, a second hybrid composite material ply, a ply of composite material, a third hybrid composite material ply, and three plies of composite material, wherein

the first hybrid composite material ply is arranged in a first direction,
the second hybrid composite material ply is arranged in a second direction, and
the third hybrid composite material ply is arranged in a third direction respectively,

wherein the first direction forms +45° respect to the second direction and the third direction forms +135° respect to the second direction; and
wherein the composite material plies are preferably carbon fiber reinforcing polymer.

The above laminate composite material structure is arranged for protects the auxiliary power unit (APU) and provides aerodynamic closure of the entire fuselage of an aircraft. For structural requirements, i.e. fire requirements, the hybrid composite material plies are as far as possible of the APU and the thirty composite material plies are closer to the APU. Further, the three composite material plies improves the manufacturing and assembly tasks of this particular laminate. Advantageously, this configuration of laminate composite material structure provides a kind of acoustic net for increasing the acoustic material specific surface for reducing the wave length of transmitted sound waves.

According to the invention, the sound waves absorbent material is: a pure insulation material comprising tows of an elastomeric material, or a reinforced insulation material comprising tows of an elastomeric material and a reinforcement carrier embedded in the elastomeric material.

The use of elastomeric material as absorbent materials advantageously provides a high absorption of noise on the laminate composite material structure. That is, due to the intrinsic properties (elasticity) of the elastomer material this is able to absorb the sonic waves.

When the sound waves absorbent material is a reinforced insulation material comprising tows of an elastomeric material and a reinforcement carrier embedded in the elastomeric material, the carrier may be mesh of carbon fiber (CF) or glass fiber (GF).

These reinforcement carriers are a mesh of carbon fiber or glass fiber embedded in the elastomeric material during the polymerization process and aims to increase the general rigidity of the material in its two main directions (longitudinal and transversal) to improve the production process and the compatibility of formations between the polymer material tows.

The elastomeric material reinforced with carbon fiber it is provided for being combined with carbon fiber materials, as well as the elastomeric material reinforced with glass fiber it is provided for being combined with glass fiber materials.

Furthermore, the reinforcement carrier embedded in the elastomeric material advantageously improve the compatibility of deformations in the absorbent material because of the approximation of the rigidities of the different materials. That is, the rigidity of the reinforced elastomeric material is approximated to the rigidity of the polymer tows, improving the general elastic behavior of the hybrid material. Moreover, increasing the elastic limit of the absorbent material (providing the reinforced elastomeric material), it is achieved that the load level necessary to enter the plastic deformation regime is much higher, thus allowing higher general levels of effort of the hybrid material.

In a second inventive aspect, the invention provides a method for manufacturing a sound waves absorbing laminate composite material structure according to the invention and its specific embodiments, the method comprising the following steps:

a) providing at least three plies of hybrid composite material,
b) laminating/stacking the at least three hybrid composite material plies,
c) bonding the at least three hybrid composite material plies, and
d) obtaining the laminate composite material;

wherein each hybrid composite material ply is manufactured by the following steps:

i) providing a plurality of first tows in a warp direction,
ii) providing a plurality of second tows in a weft direction, each second tow being intertwined with the plurality of first tows,
iii) providing a plurality of sound waves absorbent material tows in the warp direction, each sound waves absorbent material tow being intertwined with the first and second tows,

wherein in the manufacturing of the hybrid composite material ply, the first tows and the sound waves absorbent material tows are respectively prestressed with a first and second stress, and the second tows are in charge of intertwining with the first tows and the sound waves absorbent material tows, wherein the sound waves absorbent material is: a pure insulation material comprising tows of an elastomeric material, or a reinforced insulation material comprising tows of an elastomeric material and a reinforcement carrier embedded in the elastomeric material.

Embedding carriers of carbon fiber or glass fiber with the elastomeric material allows higher pretensions for the absorbent material and facilitates the tissue process of the hybrid material.

In a particular embodiment, for prepreg material, the step c) of bonding comprises compacting and curing (preferably by means of an autoclave) the stacking. In another particular embodiment, for dry fiber material, the step c) of bonding comprises consolidating the stacking by means of resin transfer moulding (RTM).

In a particular embodiment, the step b) comprises the following steps:

- stacking a first hybrid material ply in a first direction,
- stacking a second hybrid material ply in a second direction forming +45° respect to the first direction,
- stacking a second hybrid material ply in a third direction forming -45° respect to the first direction.

The stacking of hybrid composite material plies with different arrangement for each ply provides a kind of acoustic net for increasing the acoustic material specific surface that advantageously reduces the wave length of transmitted sound waves.

In another particular embodiment, the step b) comprises the following steps:

- stacking a first hybrid material ply in a first direction,
- stacking a second hybrid material ply in a second direction, forming +45° respect to the first direction,
- stacking a second hybrid material ply in a third direction,

wherein the first direction forms +45° respect to the second direction and the third direction forms +135° respect to the second direction.

In a particular embodiment, the method further comprising providing a plurality of composite material plies of CFRP or GFRP and laminating such plies of CFRP or GFRP in such a way that such plies of CFRP and GFRP being interspersed between the hybrid composite material plies.

In a particular embodiment, the method further comprises stacking thirty composite material plies and three composite material plies according to an embodiment of the sound waves absorbing laminate composite material structure of the first inventive aspect.

In a third inventive aspect, the invention provides an aircraft comprising an aircraft structure made of a sound wave absorbing laminate composite material structure according to any the first inventive aspect.

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Figure 1    This figure shows a schematic cross sectional view of the sound waves absorbing laminate composite material structure according to a first embodiment of the present invention.

Figure 2    This figure shows a schematic cross sectional view of the sound waves absorbing laminate composite material structure according to a second embodiment of the present invention.

Figure 3    This figure shows a schematic cross sectional view of the sound waves absorbing laminate composite material structure according to a third embodiment of the present invention.

Figure 4    This figure shows a top view of a hybrid composite material ply of the sound waves absorbing laminate composite material structure according to an embodiment of the present invention.

Figure 5    This figure shows a top view of a hybrid composite material ply of the sound waves absorbing laminate composite material according to an embodiment of the present invention.

Figure 6    This figure shows an exploded view of hybrid composite material plies of a sound waves absorbing laminate composite material according to an embodiment of the present invention.

Figure 7    This figure shows an aircraft according to an embodiment of the present invention.

## DETAILED DESCRIPTION OF THE INVENTION

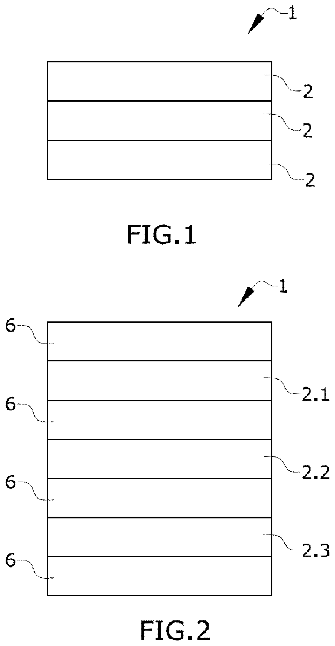

Figure 1 shows a cross sectional view of a sound waves absorbing laminate composite material structure (1) for an aircraft structure. The laminate composite material structure (1) comprises three plies of a hybrid composite material (2) according to a first embodiment of the present invention.

Figure 2 shows a cross sectional view of a second embodiment of a sound waves absorbing laminate composite material structure (1) for an aircraft structure. The laminate composite material structure (1) comprises three plies of hybrid composite material (2: 2.1, 2.2, 2.3) and four plies (6) of a carbon fiber reinforcing polymer (CFRP) composite material. The hybrid composite material plies (2) are interspersed between the CFRP plies (6).

In a particular example, the first hybrid composite material ply (2.1) is arranged in a first direction ($d_1$), the second hybrid composite material ply (2.2) is arranged in a second direction ($d_2$), and the third hybrid composite material ply (2.3) is arranged in a third direction ($d_3$) respectively. The second direction ($d_2$) forms +45° respect to the first direction ($d_1$) and the third direction ($d_3$) forms -45° respect to the first direction ($d_1$).

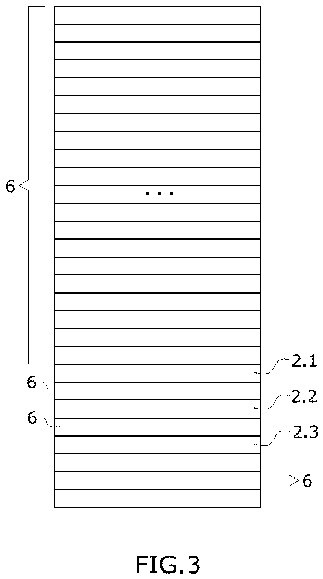

Figure 3 shows a cross sectional view of a third embodiment of a sound waves absorbing laminate composite material structure (1) for an aircraft rear structure which protects the auxiliary power unit (APU). The laminate composite material structure (1) comprises from the outside of the aircraft to the inside, thirty plies of composite material (6), a first hybrid composite material ply (2.1), a ply of composite material (6), a second hybrid composite material ply (2.2), a ply of composite material (6), a third hybrid composite material ply (2.3), and three plies of composite material (6). In a particular example, the first hybrid composite material ply (2.1) is arranged in a first direction ($d_1$), the second hybrid composite material ply (2.2) is arranged in a second direction ($d_2$), and the third hybrid composite material ply (2.3) is arranged in a third direction ($d_3$) respectively. The first direction ($d_1$) forms +45° respect to the second direction ($d_2$) and the third direction ($d_3$) forms +135° respect to the second direction ($d_2$). The composite material plies (6) are preferably carbon fiber reinforcing polymer (CFRP).

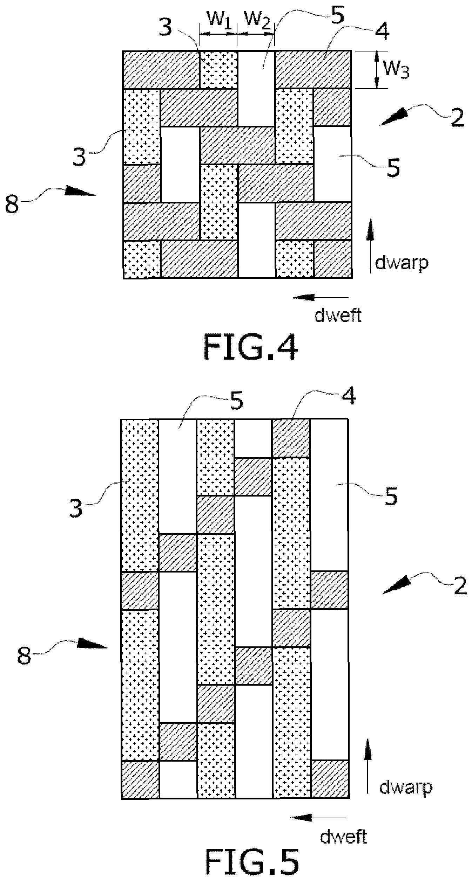

Figures 4 and 5 show hybrid composite material ply (2) that comprises a plurality of first tows (3) (identified by dots), a plurality of second tows (4) (identified by crossed lines), and a plurality of sound waves absorbent material tows (5). These first and second tows (3, 4) are plastic material reinforced by carbon fiber or glass fiber. In these figures 4 and 5 the sound waves absorbent material (5) is an elastomeric material. The first tows (3) are arranged in a warp direction ($d_{warp}$) and each first tow (3) comprises a first width $W_1$. The second tows (4) are arranged in a weft direction ($d_{weft}$) and each second tow (4) comprises a third width $W_3$. The elastomeric material tows (5) are arranged in the warp direction ($d_{warp}$) parallel to the first tows and each elastomeric material tow (5) comprises a second width $W_2$. In a particular embodiment, the first width $W_1$ is equal to the third width $W_3$.

In figure 4, the first (3) and second (4) tows and the elastomeric material tows (5) are intertwined among them forming a 2x2 twill weave carbon fiber pattern (8) as it can be observed.

In figure 5, the first (3) and second (4) tows and the elastomeric material tows (5) are intertwined among them forming a 5 harness carbon fiber pattern (8).

The acoustic properties of the present laminate composite material structure (1) depend on the width of tows which form each hybrid composite material ply (2) because wave length attenuated depend on said width. Thus, the present laminate composite material structure (1) is suitable for absorbing wave length ($\lambda$) at different levels of absorption. For a low wave length absorption, the expression ($2 \times W_2 + W_1$) has to be greater than the wave length ($\lambda$). For an average wave length absorption, the first width $W_1$ has to be lower than the wave length ($\lambda$). For a high wave length absorption, the expression ($2 \times W_2 + W_1$) has to be greater than the wave length ($\lambda$) and the wave length has to be also greater than the first width $W_1$.

The present sound waves absorbing laminate composite material structure (1) in addition is capable to transmit shear efforts of the aircraft structure by the tows comprised in each hybrid composite material ply (2).

The present invention additionally provides a method for manufacturing a sound waves absorbing laminate composite material structure (1), the method comprising the following steps:

   a) providing at least three plies (2) of hybrid composite material,
   b) stacking the at least three hybrid composite material plies (2),
   c) bonding the at least three hybrid composite material plies (2), and
   d) obtaining the laminate composite material (1);

wherein each hybrid composite material ply (2) is manufactured by the following steps:

   i) providing a plurality of first tows (3) in a warp direction ($d_{warp}$),
   ii) providing a plurality of second tows (4) in a weft direction ($d_{weft}$), each second tow (4) being intertwined with the plurality of first tows (3),
   iii) providing a plurality of sound waves absorbent material tows (5) in the warp direction ($d_{warp}$), each sound waves absorbent material tow (5) being intertwined with the first (3) and second (4) tows,

wherein in the manufacturing of the hybrid composite material ply, the first tows (3) and the sound waves absorbent material tows (5) are respectively prestressed with a first and second stress, and the second tows (4) are in charge of intertwining with the first tows (3) and the sound waves absorbent material tows (5),
wherein the sound waves absorbent material is:

   a pure insulation material comprising tows of an elastomeric material,
   or a reinforced insulation material comprising tows of an elastomeric material and a reinforcement carrier embedded in the elastomeric material.

In the steps of manufacture the hybrid composite material ply (2), firstly the first tows (3) and sound waves absorbent material tows (5) are arranged respectively prestressed in a warp direction ($d_{warp}$) with a first and second stress; secondly the second tows (4) are intertwined with the first tows (4) and the sound waves absorbent material tows (5) in a weft direction ($d_{weft}$). In this way, all the tows (3, 4, 5) being intertwined between them.

In a particular embodiment wherein the laminate composite material structure (1) comprises three hybrid composite material plies (2) (as it is shown in figure 1 or and 2), the stacking of the hybrid composite material plies (2) is performed by the following steps:

-   stacking a first hybrid material ply (2.1) in a first direction ($d_1$),
-   stacking a second hybrid material ply (2.2) in a second direction ($d_2$) forming +45° respect to the first direction ($d_1$),
-   stacking a second hybrid material ply (2.3) in a third direction ($d_3$) forming -45° respect to the first direction ($d_1$).

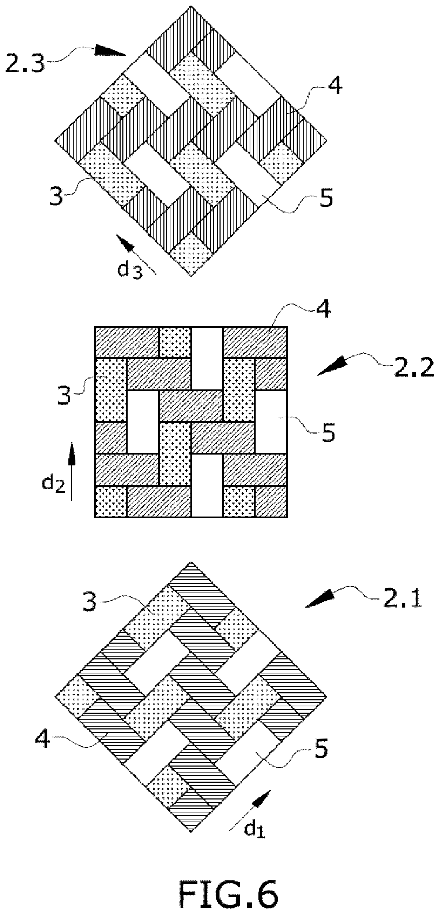

Figure 6 shows an exploded view of an embodiment of stacking three hybrid composite material plies (2: 2.1, 2.2, 2.3) for a laminate composite material structure (1). In this figure, it can be identified the orientation of each ply (2.1, 2.2, 2.3) according to this particular embodiment. The first hybrid composite material ply (2.1) is oriented in the laminate composite material in a first direction ($d_1$). The second hybrid composite material ply (2.2) is oriented in the laminate composite material in a second direction ($d_2$) which forms +45° respect the first direction ($d_1$). The third hybrid composite material ply (2.3) is oriented in the laminate composite material in a third direction ($d_3$) which forms -45° respect the first direction ($d_1$).

The three hybrid composite material plies (2.1, 2.2, 2.3) shows in figure 6 comprises a patterns according to the example shown in figure 4.

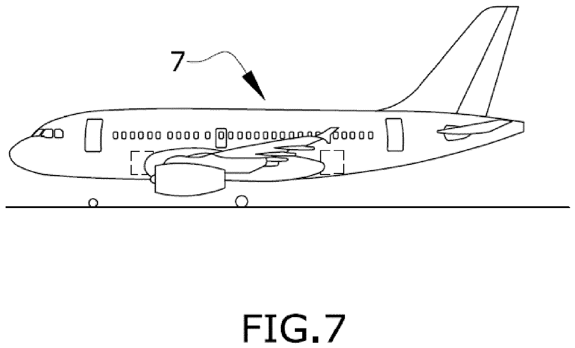

Figure 7 shows an aircraft (7) comprising an aircraft structure (not shown) manufactured with a sound waves absorbing laminate composite material structure (1). In a particular embodiment, the aircraft structure is a fan cowl. In another particular embodiment, the aircraft structure is the passenger's cabin. In another particular embodiment, the aircraft structure is a tail cone or a rear section of the aircraft.

**Claims**

1. Sound waves absorbing laminate composite material structure (1) for an aircraft structure, the laminate composite material structure (1) comprising at least three stacked plies of an hybrid composite material (2), each hybrid composite material ply (2) comprising a combination of:

    - a plurality of first tows (3) arranged parallel to a warp direction ($d_{warp}$), wherein each first tow (3) has a first width $W_1$,
    - a plurality of second tows (4) arranged parallel to a weft direction ($d_{weft}$), wherein each second tow (4) has a third width $W_3$, and
    - a plurality of sound waves absorbent material tows (5) arranged parallel to the warp direction ($d_{warp}$), wherein each sound waves absorbent material tow (5) has a second width $W_2$,

    wherein

    the first (3) and second (4) tows are tows of carbon fiber reinforcing polymer (CFRP) or glass fiber reinforcing polymer (GFRP); and
    the first (3) and second (4) plurality of tows and the plurality of sound waves absorbent material tows (5) are arranged intertwined between them forming a pattern (8) for each hybrid material ply (2), making the sound waves absorbing laminate composite material structure (1) achieves an improved absorbing level of sound waves for wavelength $\lambda$ complying with the formula

    $$\lambda < (2 \times W_2 + W_1)$$

    wherein the sound waves absorbent material is:

    a pure insulation material comprising tows of an elastomeric material, or
    a reinforced insulation material comprising tows of an elastomeric material and a reinforcement carrier embedded in the elastomeric material.

2. Sound waves absorbing laminate composite material structure (1) according to claim 1, further comprising a plurality of composite material plies (6) of carbon fiber reinforcing polymer (CFRP) or glass fiber reinforcing polymer (GFRP), being interspersed a composite material ply (6) between each two consecutive hybrid composite material plies (2).

3. Sound waves absorbing laminate composite material structure (1) according to any of previous claims, wherein the first width $W_1$ is equal to the third width $W_3$.

4. Sound waves absorbing laminate composite material structure (1) according to any of previous claims, wherein the pattern is 2x2 twill weave carbon fiber pattern (8).

5. Sound waves absorbing laminate composite material structure (1) according to any of claims 1-3, wherein the pattern is a 5 harness carbon fiber pattern.

6. Sound waves absorbing laminate composite material structure (1) according to any of previous claims, wherein the at least three stacked hybrid material plies (2) are stacked in stacked planes parallel among them in such a way that

    a first hybrid composite material ply (2.1) is arranged in a first direction ($d_1$),
    a second hybrid composite material ply (2.2) is arranged in a second direction ($d_2$), and
    a third hybrid composite material ply (2.3) is arranged in a third direction ($d_3$) respectively,

    wherein the second direction ($d_2$) forms +45° respect to the first direction ($d_1$) and the third direction ($d_3$) forms -45° respect to the first direction ($d_1$).

7. Sound waves absorbing laminate composite material structure (1) according to any of claims 1 to 5, comprising, in order of stacking, thirty plies of composite material (6), a first hybrid composite material ply (2.1), a ply of composite material (6), a second hybrid composite material ply (2.2), a ply of composite material (6), a third hybrid composite material ply (2.3), and three plies of composite material (6), wherein

    the first hybrid composite material ply (2.1) is arranged in a first direction ($d_1$),
    the second hybrid composite material ply (2.2) is arranged in a second direction ($d_2$), and
    the third hybrid composite material ply (2.3) is arranged in a third direction ($d_3$) respectively,

    wherein the first direction ($d_1$) forms +45° respect to the second direction ($d_2$) and the third direction ($d_3$) forms +135° respect to the second direction ($d_2$); and wherein the composite material plies (6) are preferably carbon fiber reinforcing polymer (CFRP).

8. Sound waves absorbing laminate composite material structure (1) according any of previous claims, wherein the carrier is a mesh of carbon fiber (CF) or glass fiber (GF).

9. Method for manufacturing a sound waves absorbing laminate composite material structure (1) according to any of the previous claims, the method comprising the following steps:

a) providing at least three plies (2) of hybrid composite material,
b) stacking the at least three hybrid composite material plies (2),
c) bonding the at least three hybrid composite material plies (2), and
d) obtaining the laminate composite material (1);

wherein each hybrid composite material ply (2) is manufactured by the following steps:

i) providing a plurality of first tows (3) in a warp direction ($d_{warp}$),
ii) providing a plurality of second tows (4) in a weft direction ($d_{weft}$), each second tow (4) being intertwined with the plurality of first tows (3),
iii) providing a plurality of sound waves absorbent material tows (5) in the warp direction ($d_{warp}$), each sound waves absorbent material tow (5) being intertwined with the first (3) and second (4) tows,

wherein in the manufacturing of the hybrid composite material ply, the first tows (3) and the sound waves absorbent material tows (5) are respectively prestressed with a first and second stress, and the second tows (4) are in charge of intertwining with the first tows (3) and the sound waves absorbent material tows (5);
wherein the sound waves absorbent material is:

a pure insulation material comprising tows of an elastomeric material, or
a reinforced insulation material comprising tows of an elastomeric material and a reinforcement carrier embedded in the elastomeric material.

10. Method according to claim 9, wherein the step b) comprises the following steps:

- stacking a first hybrid material ply (2.1) in a first direction ($d_1$),
- stacking a second hybrid material ply (2.2) in a second direction ($d_2$) forming +45° respect to the first direction ($d_1$),
- stacking a second hybrid material ply (2.3) in a third direction ($d_3$) forming -45° respect to the first direction ($d_1$).

11. Method according to claim 9, wherein the step b) comprises the following steps:

- stacking a first hybrid material ply (2.1) in a first direction ($d_1$),
- stacking a second hybrid material ply (2.2) in a second direction ($d_2$), forming +45° respect to the first direction ($d_1$),
- stacking a second hybrid material ply (2.3) in a third direction ($d_3$),

wherein the first direction ($d_1$) forms +45° respect to the second direction ($d_2$), and the third direction ($d_3$) forms +135° respect to the second direction ($d_2$).

12. Method according to any of claims 9-11, further comprising providing a plurality of composite material plies (6) of CFRP or GFRP and laminating such plies (6) of CFRP or GFRP in such a way that such plies (6) of CFRP and GFRP being interspersed between the hybrid composite material plies (5).

13. Aircraft (7) comprising an aircraft structure made of a sound wave absorbing laminate composite material structure (1) according to any of claims 1-8.

**Patentansprüche**

1. Schallwellenabsorbierende Laminatverbundwerkstoffstruktur (1) für eine Flugzeugstruktur, wobei die Laminatverbundwerkstoffstruktur (1) mindestens drei gestapelte Lagen eines Hybridverbundwerkstoffs (2) umfasst, wobei jede Hybridverbundwerkstofflage (2) eine Kombination aus Folgendem umfasst:

- eine Mehrzahl von ersten Towgarnen (3), die parallel zu einer Kettrichtung ($d_{Kett}$) angeordnet ist, wobei jedes erste Towgarn (3) eine erste Breite $W_1$ aufweist,
- eine Mehrzahl von zweiten Towgarnen (4), die parallel zu einer Schussrichtung ($d_{Schuss}$) angeordnet ist, wobei jedes zweite Towgarn (4) eine dritte Breite $W_3$ aufweist, und
- eine Mehrzahl von Towgarnen aus schallabsorbierendem Werkstoff (5), die parallel zur Kettrichtung ($d_{Kett}$) angeordnet ist, wobei jedes Towgarn aus schallabsorbierendem Werkstoff (5) eine zweite Breite $W_2$ aufweist, wobei

die ersten (3) und zweiten (4) Towgarne Towgarne aus kohlefaserverstärktem Polymer (CFRP) oder glasfaserverstärktem Polymer (GFRP) sind; und
die erste (3) und die zweite (4) Mehrzahl von Towgarnen und die Mehrzahl von Towgarnen aus schallwellenabsorbierendem Werkstoff (5) so angeordnet sind, dass sie miteinander verflochten sind, um ein Muster (8) für jede Hybridwerkstofflage (2) zu bilden, wodurch das Herstellen der schallwellenabsorbierenden Laminatverbundwerkstoffstruktur (1) einen verbesserten Grad der Absorption von Schallwellen für eine Wellenlänge λ entsprechend der folgenden Formel erreicht:

$$\lambda \;<\; (2 \; \times \; W_2 \; + \; W_1)$$

wobei der schallwellenabsorbierende Werkstoff Folgendes ist:

ein reiner Isolationswerkstoff, der Towgarne aus einem elastomeren Werkstoff umfasst, oder
ein verstärkter Isolationswerkstoff, der Towgarne aus einem elastomeren Werkstoff umfasst, und
ein Verstärkungsträger, der in den elastomeren Werkstoff eingebettet ist.

2. Schallwellenabsorbierende Laminatverbundwerkstoffstruktur (1) nach Anspruch 1, ferner umfassend eine Mehrzahl von Verbundwerkstofflagen (6) aus kohlefaserverstärktem Polymer (CFRP) oder glasfaserverstärktem Polymer (GFRP), wobei eine Verbundwerkstofflage (6) zwischen je zwei aufeinanderfolgende Hybridverbundwerkstofflagen (2) eingefügt ist.

3. Schallwellenabsorbierende Laminatverbundwerkstoffstruktur (1) nach einem der vorhergehenden Ansprüche, wobei die erste Breite $W_1$ gleich der dritten Breite $W_3$ ist.

4. Schallwellenabsorbierende Laminatverbundwerkstoffstruktur (1) nach einem der vorhergehenden Ansprüche, wobei das Muster ein Kohlefasermuster (8) mit einer 2x2-Köperbindung ist.

5. Schallwellenabsorbierende Laminatverbundwerkstoffstruktur (1) nach einem der Ansprüche 1 bis 3, wobei das Muster ein 5-Harnisch-Kohlefasermuster ist.

6. Schallwellenabsorbierende Laminatverbundwerkstoffstruktur (1) nach einem der vorhergehenden Ansprüche, wobei die mindestens drei gestapelten Hybridwerkstofflagen (2) in zueinander parallelen Stapelebenen gestapelt sind, derart dass

eine erste Hybridverbundwerkstofflage (2.1) in einer ersten Richtung ($d_1$) angeordnet ist,
eine zweite Hybridverbundwerkstofflage (2.2) in einer zweiten Richtung ($d_2$) angeordnet ist, bzw.
eine dritte Hybridverbundwerkstofflage (2.3) in einer dritten Richtung ($d_3$) angeordnet ist,

wobei die zweite Richtung ($d_2$) einen Winkel von +45° in Bezug auf die erste Richtung ($d_1$) bildet und die dritte Richtung ($d_3$) einen Winkel von -45° in Bezug auf die erste Richtung ($d_1$) bildet.

7. Schallwellenabsorbierende Laminatverbundwerkstoffstruktur (1) nach einem der Ansprüche 1 bis 5, umfassend in Stapelreihenfolge dreißig Lagen Verbundwerkstoff (6), eine erste Hybridverbundwerkstofflage (2.1), eine Lage Verbundwerkstoff (6), eine zweite Hybridverbundwerkstofflage (2.2), eine Lage Verbundwerkstoff (6), eine dritte Hybridverbundwerkstofflage (2.3) und drei Lagen Verbundwerkstoff (6), wobei

die erste Hybridverbundwerkstofflage (2.1) in einer ersten Richtung ($d_1$) angeordnet ist,
die zweite Hybridverbundwerkstofflage (2.2) in einer zweiten Richtung ($d_2$) angeordnet ist, bzw.
die dritte Hybridverbundwerkstofflage (2.3) in einer dritten Richtung ($d_3$) angeordnet ist,
wobei die erste Richtung ($d_1$) einen Winkel von +45° in Bezug auf die zweite Richtung ($d_2$) bildet und die dritte Richtung ($d_3$) einen Winkel von +135° in Bezug auf die zweite Richtung ($d_2$) bildet; und
wobei die Verbundwerkstofflagen (6) vorzugsweise kohlefaserverstärktes Polymer (CFRP) sind.

8. Schallwellenabsorbierende Laminatverbundwerkstoffstruktur (1) nach einem der vorhergehenden Ansprüche, wobei der Träger ein Netz aus Kohlefaser (CF) oder Glasfaser (GF) ist.

9. Verfahren zur Herstellung einer schallwellenabsorbierenden Laminatverbundwerkstoffstruktur (1) nach einem der vorhergehenden Ansprüche, wobei das Verfahren die folgenden Schritte umfasst:

a) Bereitstellen mindestens dreier Lagen (2) Hybridverbundwerkstoff,
b) Stapeln der mindestens drei Hybridverbundwerkstofflagen (2),
c) Binden der mindestens drei Hybridverbundwerkstofflagen (2) und
d) Erhalten des Laminatverbundwerkstoffs (1);

wobei jede Hybridverbundwerkstofflage (2) durch die folgenden Schritte hergestellt wird:

i) Bereitstellen einer Mehrzahl von ersten Towgarnen (3) in einer Kettrichtung ($d_{Kett}$),
ii) Bereitstellen einer Mehrzahl von zweiten Towgarnen (4) in einer Schussrichtung ($d_{Schuss}$), wobei jedes zweite Towgarn (4) mit der Mehrzahl von ersten Towgarnen (3) verflochten wird,

iii) Bereitstellen einer Mehrzahl von Towgarnen aus schallwellenabsorbierendem Werkstoff (5) in der Kettrichtung ($d_{Kett}$), wobei jedes Towgarn aus schallwellenabsorbierendem Werkstoff (5) mit den ersten (3) und zweiten (4) Towgarnen verflochten wird,

wobei bei der Herstellung der Hybridverbundwerkstofflage die ersten Towgarne (3) und die Towgarne aus schallwellenabsorbierendem Werkstoff (5) mit einer ersten Spannung bzw. einer zweiten Spannung vorgespannt werden, und die zweiten Towgarne (4) für die Verflechtung mit den ersten Towgarnen (3) und den Towgarnen aus schallwellenabsorbierendem Werkstoff (5) zuständig sind;
wobei der schallwellenabsorbierende Werkstoff Folgendes ist:

ein reiner Isolationswerkstoff, der Towgarne aus einem elastomeren Werkstoff umfasst, oder ein verstärkter Isolationswerkstoff, der Towgarne aus einem elastomeren Werkstoff umfasst, und
ein Verstärkungsträger, der in den elastomeren Werkstoff eingebettet ist.

10. Verfahren nach Anspruch 9, wobei der Schritt b) die folgenden Schritte umfasst:

- Stapeln einer ersten Hybridwerkstofflage (2.1) in einer ersten Richtung ($d_1$),
- Stapeln einer zweiten Hybridwerkstofflage (2.2) in einer zweiten Richtung ($d_2$), die einen Winkel von +45° in Bezug auf die erste Richtung ($d_1$) bildet,
- Stapeln einer dritten Hybridwerkstofflage (2.3) in einer dritten Richtung ($d_3$), die einen Winkel von -45° in Bezug auf die erste Richtung ($d_1$) bildet.

11. Verfahren nach Anspruch 9, wobei der Schritt b) die folgenden Schritte umfasst:

- Stapeln einer ersten Hybridwerkstofflage (2.1) in einer ersten Richtung ($d_1$),
- Stapeln einer zweiten Hybridwerkstofflage (2.2) in einer zweiten Richtung ($d_2$), die einen Winkel von +45° in Bezug auf die erste Richtung ($d_1$) bildet,
- Stapeln einer zweiten Hybridwerkstofflage (2.3) in einer dritten Richtung ($d_3$), wobei die erste Richtung ($d_1$) einen Winkel von +45° in Bezug auf die zweite Richtung ($d_2$) bildet und die dritte Richtung ($d_3$) einen Winkel von +135° in Bezug auf die zweite Richtung ($d_2$) bildet.

12. Verfahren nach einem der Ansprüche 9 bis 11, ferner umfassend ein Bereitstellen einer Mehrzahl von Verbundwerkstofflagen (6) aus CFRP oder GFRP und derartiges Laminieren dieser Lagen (6) aus CFRP oder GFRP, dass diese Lagen (6) aus CFRP und GFRP zwischen die Hybridverbundwerkstofflagen (5) eingefügt werden.

13. Flugzeug (7), umfassend eine Flugzeugstruktur, die aus einer schallwellenabsorbierenden Laminatverbundwerkstoffstruktur (1) nach einem der Ansprüche 1 bis 8 hergestellt ist.

## Revendications

1. Structure en matériau composite stratifié absorbant les ondes sonores (1) pour une structure d'aéronef, la structure en matériau composite stratifié (1) comprenant au moins trois couches empilées d'un matériau composite hybride (2), chaque couche de matériau composite hybride (2) comprenant une combinaison :

- d'une pluralité de premiers câbles (3) disposés parallèlement à une direction de chaîne ($d_{warp}$), chaque premier câble (3) ayant une première largeur $W_1$,
- d'une pluralité de deuxièmes câbles (4) disposés parallèlement à une direction de trame ($d_{weft}$), chaque deuxième câble (4) ayant une troisième largeur $W_3$, et
- d'une pluralité de câbles en matériau absorbant les ondes sonores (5) disposés parallèlement à la direction de chaîne ($d_{warp}$), chaque câble en matériau absorbant les ondes sonores (5) ayant une deuxième largeur $W_2$,

dans laquelle

les premiers (3) et deuxièmes (4) câbles sont des câbles de polymère renforcé de fibres de carbone (CFRP) ou de polymère renforcé de fibres de verre (GFRP) ; et
les première (3) et deuxième (4) pluralités de câbles et la pluralité de câbles en matériau absorbant les ondes sonores (5) sont disposées entrelacées entre elles, formant un motif (8) pour chaque couche de matériau hybride (2), faisant atteindre à la structure en matériau composite stratifié absorbant les ondes sonores (1) un niveau amélioré d'absorption des ondes sonores pour une longueur d'onde λ répondant à la formule

$$\lambda < (2 \times W_2 + W_1)$$

dans laquelle le matériau absorbant les ondes sonores est :

un matériau d'isolation pur comprenant des câbles d'un matériau élastomère, ou

un matériau d'isolation renforcé comprenant des câbles d'un matériau élastomère et un support de renforcement incorporé dans le matériau élastomère.

2. Structure en matériau composite stratifié absorbant les ondes sonores (1) selon la revendication 1, comprenant en outre une pluralité de couches de matériau composite (6) en polymère renforcé de fibres de carbone (CFRP) ou en polymère renforcé de fibres de verre (GFRP), une couche de matériau composite (6) étant intercalée entre toutes les deux couches de matériau composite hybride (2) consécutives.

3. Structure en matériau composite stratifié absorbant les ondes sonores (1) selon l'une quelconque des revendications précédentes, dans laquelle la première largeur $W_1$ est égale à la troisième largeur $W_3$.

4. Structure en matériau composite stratifié absorbant les ondes sonores (1) selon l'une quelconque des revendications précédentes, dans laquelle le motif est un motif de fibres de carbone en armure sergé 2x2.

5. Structure en matériau composite stratifié absorbant les ondes sonores (1) selon l'une quelconque des revendications 1 à 3, dans laquelle le motif est un motif de fibres de carbone à 5 harnais.

6. Structure en matériau composite stratifié absorbant les ondes sonores (1) selon l'une quelconque des revendications précédentes, dans laquelle les au moins trois couches de matériau hybride empilées (2) sont empilées dans des plans d'empilement parallèles les uns aux autres de telle sorte que

une première couche de matériau composite hybride (2.1) est disposée dans une première direction ($d_1$),

une deuxième couche de matériau composite hybride (2.2) est disposée dans une deuxième direction ($d_2$), et

une troisième couche de matériau composite hybride (2.3) est disposée dans une troisième direction ($d_3$), respectivement,

dans laquelle la deuxième direction ($d_2$) forme un angle de +45° par rapport à la première direction ($d_1$) et la troisième direction ($d_3$) forme un angle de -45° par rapport à la première direction ($d_1$).

7. Structure en matériau composite stratifié absorbant les ondes sonores (1) selon l'une quelconque des revendications 1 à 5, comprenant, dans l'ordre d'empilement, trente couches de matériau composite (6), une première couche de matériau composite hybride (2.1), une couche de matériau composite (6), une deuxième couche de matériau composite hybride (2.2), une couche de matériau composite (6), une troisième couche de matériau composite hybride (2.3), et trois couches de matériau composite (6), dans laquelle

la première couche de matériau composite hybride (2.1) est disposée dans une première direction ($d_1$),

la deuxième couche de matériau composite hybride (2.2) est disposée dans une deuxième direction ($d_2$), et

la troisième couche de matériau composite hybride (2.3) est disposée dans une troisième direction ($d_3$), respectivement,

dans laquelle la première direction ($d_1$) forme un angle de +45° par rapport à la deuxième direction ($d_2$) et la troisième direction ($d_3$) forme un angle de +135° par rapport à la deuxième direction ($d_2$) ; et

dans laquelle les couches de matériau composite (6) sont de préférence en polymère renforcé de fibres de carbone (CFRP).

8. Structure en matériau composite stratifié absorbant les ondes sonores (1) selon l'une quelconque des revendications précédentes, dans laquelle le support est un treillis de fibres de carbone (CF) ou de fibres de verre (GF).

9. Procédé de fabrication d'une structure en matériau composite stratifié absorbant les ondes sonores (1) selon l'une quelconque des revendications précédentes, le procédé comprenant les étapes suivantes :

a) obtention d'au moins trois couches (2) de matériau composite hybride,
b) empilement des au moins trois couches de matériau composite hybride (2),
c) liaison des au moins trois couches de matériau composite hybride (2), et
d) obtention du matériau composite stratifié (1) ;

dans lequel chaque couche de matériau composite hybride (2) est fabriquée par les étapes suivantes :

i) obtention d'une pluralité de premiers câbles (3) dans une direction de chaîne ($d_{warp}$),
ii) obtention d'une pluralité de deuxièmes câbles (4) dans une direction de trame ($d_{weft}$), chaque deuxième câble (4) étant entrelacé avec la pluralité de premiers câbles (3),
iii) obtention d'une pluralité de câbles en matériau absorbant les ondes sonores (5) dans la direction de chaîne ($d_{warp}$), chaque câble en matériau absorbant les ondes sonores (5) étant entrelacé avec les premiers (3) et deuxièmes (4) câbles,

dans lequel, dans la fabrication de la couche de matériau composite hybride, les premiers câbles (3) et les câbles en matériau absorbant les ondes sonores (5) sont respectivement précontraints avec une première et une deuxième contrainte, et les deuxièmes câbles (4) sont en charge d'entrelacement avec les premiers câbles (3) et les câbles en matériau absorbant les ondes sonores (5) ;

dans lequel le matériau absorbant les ondes sonores est :

un matériau d'isolation pur comprenant des câbles d'un matériau élastomère, ou
un matériau d'isolation renforcé comprenant des câbles d'un matériau élastomère et un support de renforcement incorporé dans le matériau élastomère.

10. Procédé selon la revendication 9, dans lequel l'étape b) comprend les étapes suivantes :

- empilement d'une première couche de matériau hybride (2.1) dans une première direction ($d_1$),
- empilement d'une deuxième couche de matériau hybride (2.2) dans une deuxième direction ($d_2$) formant un angle de +45° par rapport à la première direction ($d_1$),
- empilement d'une deuxième couche de matériau hybride (2.3) dans une troisième direction ($d_3$) formant un angle de -45° par rapport à la première direction ($d_1$).

11. Procédé selon la revendication 9, dans lequel l'étape b) comprend les étapes suivantes :

- empilement d'une première couche de matériau hybride (2.1) dans une première direction ($d_1$),
- empilement d'une deuxième couche de matériau hybride (2.2) dans une deuxième direction ($d_2$) formant un angle de +45° par rapport à la première direction ($d_1$),
- empilement d'une deuxième couche de matériau hybride (2.3) dans une troisième direction ($d_3$),

dans lequel la première direction ($d_1$) forme un angle de +45° par rapport à la deuxième direction ($d_2$) et la troisième direction ($d_3$) forme un angle de +135° par rapport à la deuxième direction ($d_2$).

12. Procédé selon l'une quelconque des revendications 9 à 11, comprenant en outre l'obtention d'une pluralité de couches de matériau composite (6) en CFRP ou GFRP et la stratification de ces couches (6) en CFRP ou GFRP de manière à ce que ces couches (6) en CFRP ou GFRP soient intercalées entre les couches de matériau composite hybride (5) .

13. Aéronef (7) comprenant une structure d'aéronef constituée d'une structure en matériau composite stratifié absorbant les ondes sonores (1) selon l'une quelconque des revendications 1 à 8.

FIG.1

FIG.2

FIG.3

FIG.4

FIG.5

FIG.6

FIG.7

**EP 3 782 811 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018002229 A